**Europäisches Patentamt**

**European Patent Office**

**Office européen des brevets**

(19)

(11) Veröffentlichungsnummer : **0 033 470**
**B1**

(12)

# EUROPÄISCHE PATENTSCHRIFT

(45) Veröffentlichungstag der Patentschrift :
**13.06.84**

(21) Anmeldenummer : **81100394.6**

(22) Anmeldetag : **20.01.81**

(51) Int. Cl.³ : **H 04 B  3/46, H 04 L  25/28**

(54) **Schaltungsanordnung zur Bildung eines Schleifenschlusses in einem Zwischenregenerator eines PCM-Systems.**

(30) Priorität : **31.01.80 DE 3003516**

(43) Veröffentlichungstag der Anmeldung :
**12.08.81 Patentblatt 81/32**

(45) Bekanntmachung des Hinweises auf die Patenterteilung : **13.06.84 Patentblatt 84/24**

(84) Benannte Vertragsstaaten :
**AT BE CH DE FR GB IT LI NL SE**

(56) Entgegenhaltungen :
**DE-A- 2 632 193**
**DE-A- 2 653 201**
**DE-B- 2 032 913**
**DE-B- 2 358 272**
**DE-B- 2 644 942**
**DE-C- 2 004 810**
**FREQUENZ, 33. Jahrgang, 1979, Heft 12, Berlin HEL-**
**MUT BAUCH "Planungsaspekte zu einem Übertra-**
**gungssystem mit 565 Mbit/s für Koaxialkabel", Seiten**
**346-351**

(73) Patentinhaber : **SIEMENS AKTIENGESELLSCHAFT**
**Berlin und München Witteisbacherplatz 2**
**D-8000 München 2 (DE)**

(72) Erfinder : **Dömer, Josef**
**Flossgatter 18**
**D-8021 Hohenschäftlarn (DE)**
Erfinder : **Thanhäuser, Gerhard, Dipl.-Ing.**
**Mozartstrasse 9**
**D-8905 Mering (DE)**

## Beschreibung

Die Erfindung betrifft eine Schaltungsanordnung zur Bildung eines Schleifenschlusses in einem Zwischenregenerator eines PCM-Systems mit einem ersten und einem zweiten PCM-Regenerator, die in unterschiedliche Übertragungsrichtungen wirken, bei der jeder Regenerator einen eingangsseitigen Entzerrer und daran angeschlossen die Reihenschaltung eines Amplitudenentscheiders, eines Zeitentscheiders und eines Impulsverstärkers enthält, und bei der die beiden auf unterschiedlichem Potential befindlichen Regeneratoren durch wenigstens einen hochspannungsfesten Signalübergang miteinander verbunden sind und außerdem der empfangene Regenerator eine mit dessen Amplituden- oder Zeitentscheider verbundene Anordnung zur Ortungssignalauswertung und eine damit verbundene Einrichtung zur Steuerung eines Schleifenschalters zur Verbindung eines Ausganges des empfangenen Regenerators mit einem Eingang eines Regenerators für die Gegenrichtung enthält, bei der ein hochspannungsfester Übertrager das Steuersignal für den Schleifenschalter zu einem im zweiten Regenerator enthaltenen Steuerfrequenzempfänger überträgt, bei der der Ausgang des Steuerfrequenzempfängers mit einem Steuereingang des Schleifenschalters verbunden ist, dessen Eingang mit einem Ausgang des ersten Regenerators und dessen Ausgang mit einem Eingang des zweiten Regenerators verbunden ist. PCM-Strecken enthalten zwischen zwei Leitungsendgeräten Zwischenregeneratoren, die im Abstand von einigen Kilometern in die Kabelstrecke eingefügt sind und dazu dienen, die durch die frequenzabhängige Dämpfung des verwendeten Kabels bedingte Verzerrung und Dämpfung der Übertragungsimpulse aufzuheben. Derartige Zwischenverstärker sind in unterirdischen unbemannten Stationen zusammengefaßt und enthalten wenigstens einen Regenerator für die eine Übertragungsrichtung und einen anderen für die Rückrichtung.

Zur Aufhebung der frequenzabhängigen Dämpfung der Übertragungssignale durch das Kabel enthalten die einzelnen Regeneratoren eingangsseitig jeweils einen Entzerrer, daran angeschlossen einen Amplitudenentscheider, der die Funktion eines Schwellenwertschalters hat und durch den Rauschanteile und Störungen geringerer Amplitude abgeschnitten werden. An den Amplitudenentscheider schließt sich ein Zeitentscheider zur zeitmäßigen Regenerierung der übertragenen Impulse und an diesen ein Impulsverstärker zur Erzeugung der Sendeleistung für den nächsten Übertragungsabschnitt an. Die Regeneratoren enthalten weitere Einrichtungen zur Taktableitung, Fernspeiseweichen und gegebenenfalls auch Alarmierungseinrichtungen, die aber im vorliegenden Falle nicht von Interesse sind.

Zur Ortung von Fehlern auf der Übertragungsstrecke enthält jeder Zwischenregenerator zusätzlich eine Einrichtung zur Bildung eines Schleifenschlusses zwischen dem Ausgang des Regenerators für die eine Übertragungsrichtung und dem Eingang des Regenerators für die Rückrichtung, wobei der Schleifenschluß durch einen gesteuerten Umschalter bewirkt wird und über eine Verbindung erfolgt, die Mittel zur Potentialtrennung zwischen den beiden auf verschiedenen Fernspeisepotentialen liegenden Regeneratoren und gegebenenfalls auch ein Dämpfungsnetzwerk enthält.

Zur Steuerung des Schleifenschlußschalters enthält der mit dem Sendeteil der Ortungseinrichtung verbundene und damit empfangende Regenerator eine Anordnung zur Auswertung des vom Ortungsgerät ausgesandten Ortungssignals und eine damit verbundene Einrichtung zur Steuerung des Schleifenschalters. Der Schleifenschalter dient dazu, auf der Eingangsseite des Regenerators der Gegenrichtung diesen von dem aus der Gegenrichtung ankommenden Übertragungssignal zu trennen und stattdessen mit dem Ausgang des empfangenden Regenerators zu verbinden. Der Schleifenschlußschalter muß sich deshalb auf dem Potential des Regenerators für die Gegenrichtung befinden, während sich die mit dem Amplituden- oder Zeitentscheider des ersten Regenerators verbundene Anordnung zur Ortungssignalauswertung auf dessen Potential befindet. Neben den Mitteln zur Potentialtrennung in der eigentlichen Schleife ist deshalb eine weitere Potentialtrennstelle vorzusehen, über die das Steuersignal für den Schleifenschluß übertragen werden kann.

Aus der DE-PS 20 04 810, der DE-OS 26 53 201 und der DE-OS 26 32 193 sind bereits Möglichkeiten zur Bildung eines Schleifenschlusses in einem Zwischenregenerator eines PCM-Systems bekannt. Bei bekannten Lösungen wird beispielsweise das niederfrequente Ortungssignal so aufbereitet, daß es durch Einsatz eines spannungsfesten Niederfrequenzübertragers zum Regenerator für die Gegenrichtung übertragen werden kann. Es ist auch denkbar, das Steuersignal mittels derzeit allerdings unverhältnismäßig teurer Fotowandler zu übertragen. Bei den bekannten Lösungen besteht das Problem, daß wegen der Spannungsfestigkeit einerseits und des zur Vermeidung von Rückwirkungen im normalen Betrieb kapazitätsarmen Aufbaues andererseits ein vergleichsweise hoher Aufwand getrieben werden muß. Dieser Aufwand wird besonders hoch bei PCM-Systemen hoher Bitrate, die bei mehr als 20 bis 30 Mbit/s liegt.

Aus der DE-B-26 44 942 ist ebenfalls ein Verfahren und eine Anordnung zur Fehlerortung der eingangs erwähnten Art beschrieben, bei denen aus Teilen der übertragenen Prüfsignale nach einer Demodulation eine für jeden Regenerator charakteristische niederfrequente Resonanzschwingung mittels eines Demodulators und eines Schwingkreises ausgesiebt wird und in einem Schwellwertschalter daraus ein pulsförmiges Signal erzeugt wird. Dieses pulsförmige Signal wird mittels eines Übertragers zur Steuereinrichtung des Schleifenschlußschalters potentialfrei übertragen. Die Entgegenhaltung ist damit auf das Vorliegen einer aussiebbaren Resonanzschwingung in den Prüfsignalen beschränkt, so daß sich bei höheren Bitraten und bei allgemein vorgeschriebenen Verwendung von Verwürflern Schwierigkeiten ergeben könnten.

Aus der DE-B-20 32 913 ist eine Schaltungsanordnung zur Ansteuerung von elektronischen Signalübertragern bekannt, bei der zur Ansteuerung von Telegrafiezeichengebern sogenannte Doppelstrom-Signalübertrager mit Einfachstromsignalen angesteuert werden. Der verwendete Übertrager enthält zwei Primärwicklungen, die jeweils Teil zweier, unterschiedliche Töne erzeugender, Oszillatoren sind.

Die Aufgabe der Erfindung besteht also darin, für eine Schaltungsanordnung der eingangs erwähnten Art eine auch bei den erwähnten vergleichsweise hohen Bitraten mögliche Lösung anzugeben, die im Hinblick auf eine breite Einsetzbarkeit vom speziellen System und der speziellen Bitrate unabhängig ist.

Erfindungsgemäß wird die Aufgabe dadurch gelöst, daß an den Ausgang der Einrichtung zur Ortungssignalauswertung der Eingang eines Steuerfrequenzoszillators mit einer Schwingfrequenz bei etwa 1 % der Nyquistfrequenz der zu übertragenden PCM-Signale angeschlossen ist und daß der Steuerfrequenzoszillator als frequenzbestimmendes Glied die Primärwicklung des hochspannungsfesten Übertragers enthält, daß der Steueroszillator ein mit dessen Steuereingang verbundenes UND-Gatter enthält, dessen Ausgang über einen ersten Widerstand mit dem Kollektoranschluß eines ersten Transistors und mit dem einen Anschluß der Primärwicklung des ersten Übertragers verbunden ist, daß der zweite Anschluß dieser Primärwicklung mit dem Basisanschluß des ersten Transistors und über einen ersten Kondensator mit Masse verbunden ist, daß der Emitteranschluß des ersten Transistors direkt und der Kollektoranschluß dieses Transistors über einen zweiten Kondensator mit Masse verbunden sind und daß die Sekundärwicklung des ersten Übertragers mit dem Eingang des Steuerfrequenzempfängers verbunden ist.

Eine im Hinblick auf den geringen Leistungsbedarf und den einfachen Aufbau bevorzugte Weiterbildung der Erfindung ergibt sich dadurch, daß die Einrichtung zur Ortungssignalauswertung aus dem empfangenen Ortungssignal einen Logikpegel zur Einschaltung des Steuerfrequenzoszillators erzeugt.

Weitere wegen ihres geringen Aufwandes bevorzugte Ausbildungen der erfindungsgemäßen Schaltungsanordnung sind in den Ansprüchen 3 und 4 beschrieben.

Die Erfindung soll im folgenden anhand der Zeichnungen näher erläutert werden. In der Zeichnung zeigt

Figur 1 den prinzipiellen Aufbau eines PCM-Zwischenregenerators mit der erfindungsgemäßen Schaltungsanordnung und

Figur 2 die Schaltungen des in der Fig. 1 verwendeten Steuerfrequenzoszillators und des an diesen angeschlossenen Steuerfrequenzempfängers.

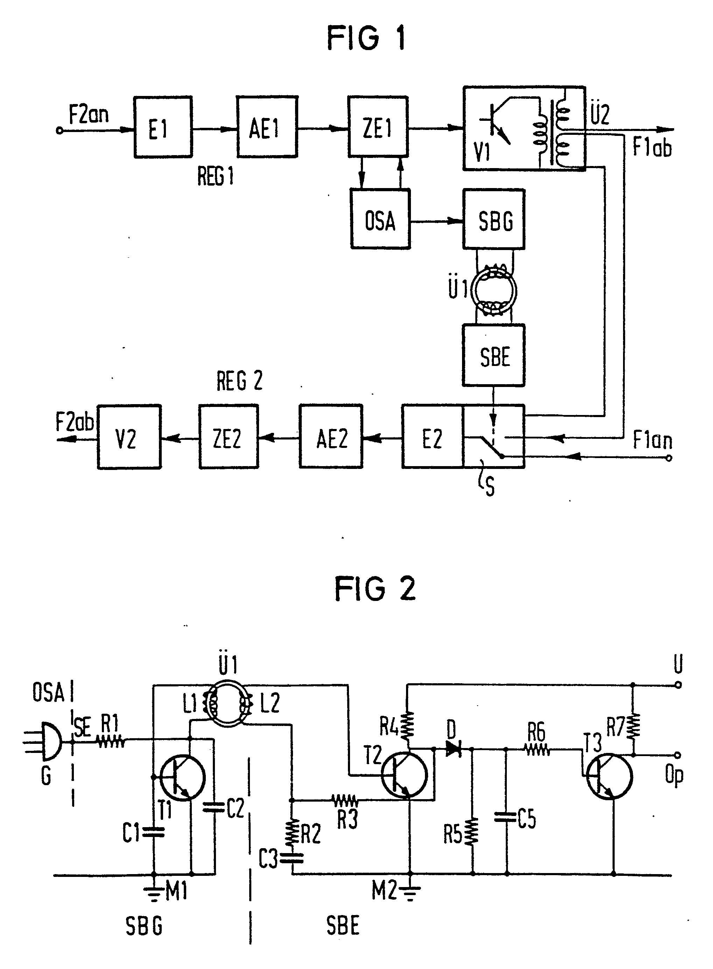

Der in der Fig. 1 dargestellte Zwischenregenerator besteht aus dem empfangenden Regenerator REG1 und dem Regenerator REG2 für die Gegenrichtung, die sich auf unterschiedlichem Fernspeisepotential befinden und nur durch die beiden Übertrager Ü1 und Ü2 miteinander verbunden sind. Beide Regeneratoren enthalten eine Reihenschaltung aus einem empfangsseitigen Entzerrer E1 bzw. E2, einem daran angeschlossenen Amplitudenentscheider AE1 bzw. AE2, einem damit verbundenen Zeitentscheider ZE1 bzw. ZE2 und Impulsverstärker V1 bzw. V2, deren Ausgangsanschlüsse jeweils mit den abgehenden Leitungen F1ab bzw. F2ab verbunden sind. Diese Teile der Regeneratoren dienen der Verarbeitung der zu übertragenden Informationssignale und der während des Fehlerortungsvorganges übertragenen Ortungssignale. Im vorliegenden Falle ist angenommen, daß der Eingang F2 an den Ausgang einer Endstelle angeschlossen ist, die auch das Fehlerortungsgerät enthält und von der aus das Fehlerortungssignal über die Strecke zu den einzelnen Zwischenregeneratoren übertragen wird.

Entsprechend dem erwähnten Stand der Technik bestehen eine Reihe Möglichkeiten, zusammen mit dem Ortungssignal einen Schleifenschlußbefehl in Form einer Adresse für jeden Zwischengenerator auszusenden, auf die im empfangenden Regenerator die Anordnung zur Ortungssignalauswertung anspricht, es besteht auch die Möglichkeit, eine andere Art der Ortungssignalauswertung mit einheitlicher Kennung vorzunehmen und dabei durch eine bestimmte zeitliche Aufeinanderfolge von Steuerbefehlen zunächst in dem der Sendestelle nächsten Zwischenregenerator und dann auch in den folgenden Zwischenregeneratoren einen Schleifenschluß zu veranlassen. Die Anordnung OSA zur Ortungssignalauswertung in Wechselwirkung mit dem Zeitentscheider ist deshalb in jedem Falle entsprechend dem verwendeten Ortungssignal aufzubauen.

Im vorliegenden Falle handelt es sich um ein Ortungsverfahren der letzteren Art ohne Adresse für jeden Zwischenregenerator. Es wird also zusammen mit dem Ortungssignal eine einheitliche Kennung übertragen, die aus einer sich periodisch wiederholenden Impulskombination besteht, welche im normalen Betriebszustand nicht vorkommt und deshalb auch nicht vorgetäuscht werden kann. Die Erkennung dieser Impulskombination kann mittels einer bekannten Integrationsschaltung, die an ihrem Ausgang beispielsweise ein UND-Gatter enthält, erfolgen, das bei Auftreten der für den Zwischenregenerator spezifischen Kennung an seinem Ausgang einen bestimmten Logikpegel erzeugt. Dieser Logikpegel schaltet den angeschlossenen Steuerfrequenzoszillator SBG ein. Dieser Steuerfrequenzoszillator wirkt als Schleifenbefehlsgeber und erzeugt ein Wechselspannungssignal im Frequenzbereich zwischen etwa 50 ... 100 kHz entsprechend 0,1 ... 1 % der Nyquistfrequenz der zu übertragenden PCM-Signale, das als Schleifenbefehl über den ersten Übertrager Ü1 zum Regenerator REG2 für die Gegenrichtung übertragen wird.

Der Impulsverstärker V1 des ersten Regenerators enthält einen Ausgangsübertrager Ü2 mit zwei Sekundärwicklungen. Die erste Sekundärwicklung steuert den Ausgang F1ab, während die zweite Wicklung kapazitätsarm und hochspannungsfest angekoppelt ist und das Ausgangssignal zum Schleifenschlußschalter überträgt.

Mit der Sekundärwicklung des ersten Übertragers Ü1 ist der als Schleifenbefehlsempfänger dienende Steuerfrequenzempfänger SBE verbunden. Dieser erzeugt ein Ausgangssignal, das dem Steuereingang des Schleifenschlußschalters S zugeführt wird, der dem Entzerrer E2 des Regenerators REG2 für die Gegenrichtung vorgeschaltet ist.

Während der eine Signaleingang des Schleifenschlußschalters mit dem Eingang F1an des Regenerators für die Gegenrichtung verbunden ist, ist der andere Signaleingang des Schleifenschlußschalters S mit der Sekundärwicklung des zweiten Übertragers Ü2 verbunden.

Während des Fehlerortungsvorganges tritt am Ausgang der Anordnung zur Ortungssignalauswertung ein Logikpegel auf, der für eine bestimmte Zeit gespeichert wird und der den Steuerfrequenzoszillator veranlaßt, ein entsprechendes Wechselspannungssignal über den Übertrager Ü1 zum Steuerfrequenzempfänger abzugeben, dessen Ausgangssignal wieder den Schleifenschlußschalter in die obere Position schaltet. Dadurch ist der Schleifenschluß geschaltet und die Ortungssignale durchlaufen vom Ausgang des Impulsverstärkers V1 den Schleifenschlußschalter, den Regenerator REG2 für die Gegenrichtung und die nachgeschaltete Übertragungsstrecke bis zum Empfangsteil des angeschlossenen Ortungsgerätes und können dort auf das Auftreten von Fehlern untersucht werden.

In der Fig. 2 ist zusätzlich zum Steuerfrequenzoszillator SBG und zum Steuerfrequenzempfänger SBE noch das Gatter G als Teil der Anordnung OSA zur Ortungssignalauswertung dargestellt. Dabei wurde auf die Darstellung der Halteschaltung für den am Gatterausgang auftretenden Logikpegel und auf den Speisespannungsanschluß des Gatters verzichtet. Mit dem Ausgangsanschluß des Gatters G ist der Steuereingang SE des Steuerfrequenzoszillators SBG verbunden. Über einen ersten Widerstand R1 ist an den Steuereingang der Kollektoranschluß eines ersten npn-Transistors T1 und der eine Anschluß der Primärwicklung eines ersten Übertragers Ü1 angeschlossen. Der andere Anschluß dieser Primärwicklung ist mit dem Basisanschluß des ersten Transistors und über einen ersten Kondensator C1 mit dem Masseanschluß M1 des empfangenden Regenerators REG1 verbunden. Mit diesem Masseanschluß sind außerdem der Emitteranschluß des ersten Transistors T1 direkt und der Kollektoranschluß dieses Transistors über einen zweiten Kondensator C2 verbunden. Frequenzbestimmend für den Oszillator SBG sind also die Induktivität der Primärwicklung L1 und die Kapazität der beiden Kondensatoren C1 und C2. Der einfache Aufbau dieses Oszillators erfordert nur einen so geringen Betriebsstrom, daß dieser über den Steuereingang SE vom Gatter G zugeführt und damit auch geschaltet werden kann. Der Oszillator schwingt also nur während des Ortungsvorganges und verbraucht damit auch nur in diesem Betriebszustand eine vergleichweise geringfügige Leistung.

Die Sekundärwicklung L2 des Ringkernübertragers Ü1 kann aus wenigen Windungen bestehen und ist deshalb sehr niederinduktiv und ergibt damit eine sehr kapazitätsarme und dennoch spannungsfeste Ankopplung des Steuerfrequenzempfängers an den Oszillatorkreis. Mit dem einen Anschluß der Sekundärwicklung L2 ist der Basisanschluß eines zweiten npn-Transistors T2 verbunden, der andere Sekundärwicklungsanschluß ist über die Reihenschaltung eines zweiten Widerstandes R2 und eines dritten Kondensators C2 mit dem Masseanschluß M2 des Regenerators REG2 für die Gegenrichtung und über einen dritten Widerstand R3 mit dem Kollektoranschluß des zweiten Transistors T2 verbunden. Der Kollektoranschluß dieses Transistors ist außerdem über einen vierten Widerstand R4 mit einer Betriebsspannungsquelle U und über eine für die Speisespannung in Sperrichtung gepolte Diode D mit einem fünften Widerstand R5, einem fünften Kondensator C5 und einem sechsten Widerstand R6 verbunden. Der Emitteranschluß des zweiten Transistors T2, die beiden anderen Anschlüsse des fünften Widerstandes R5 und des fünften Kondensators C5 und der Emitteranschluß eines dritten npn-Transistors T3 sind zusammen an den Masseanschluß M2 geführt. Der andere Anschluß des sechsten Widerstandes R6 ist mit dem Basisanschluß des dritten Transistors T3 verbunden, während dessen Kollektoranschluß über einen siebten Widerstand R7 mit dem Anschluß für die Betriebsspannung U und mit einem Steuersignalausgang Op verbunden ist. An den Steuersignalausgang Op ist der Steuersignaleingang des Schleifenschlußschalters S angeschlossen. Die mittels des Transistors T2 aufgebaute Verstärkerstufe stellt also einen Wechselspannungsverstärker dar, an den sich eine Gleichrichterstufe und eine mittels des Transistors T3 aufgebaute Schaltverstärkerstufe anschließt. Die Verstärkung und damit auch der Eingangswiderstand der mittels des Transistors T2 aufgebauten Verstärkerstufe ist durch Veränderung der Widerstandswerte des Gegenkopplungswiderstandes R3 und des Kollektorwiderstandes R4 des zweiten Transistors in bestimmten Grenzen einstellbar. Sie ist so eingestellt, daß einerseits die Schaltspannung an der Diode D im Einschaltzustand zum Durchschalten des Schaltverstärkers ausreichend ist, andererseits aber die Belastung der Sekundärwicklung des Ringkernübertragers E1 so klein bleibt, daß der Steuerfrequenzoszillator anschwingen kann.

Es ist zwar auch denkbar, den Übertrager Ü2 für das Ortungssignal für die Übertragung des Steuersignals mitzuverwenden. Dabei ergibt sich aber neben der Notwendigkeit, Streuungen und Rückwirkungen zu vermeiden, auch die Notwendigkeit, zusätzliche Selektionsglieder vorzusehen, so daß der Aufwand gegenüber dem Vorteil der Einsparung eines Ringkernübertragers vergleichsweise hoch ist.

## Ansprüche

1. Schaltungsanordnung zur Bildung eines Schleifenschlusses in einem Zwischenregenerator eines PCM-Systems mit einem ersten (REG1) und einem zweiten PCM-Regenerator (REG2), die in unterschiedliche Übertragungsrichtungen wirken, bei der jeder Regenerator einen eingangsseitigen Entzerrer (E1, E2) und daran angeschlossen die Reihenschaltung eines Amplitudenentscheiders (AE1 ; AE2), eines Zeitentscheiders (ZE1, ZE2) und eines Impulsverstärkers (V1, V2) enthält, und bei der die beiden auf unterschiedlichem Potential befindlichen Regeneratoren (REG1, REG2) durch wenigstens einen hochspannungsfesten Signalübergang (Ü2) miteinander verbunden sind und außerdem der empfangene Regenerator (REG1) eine mit dessen Amplituden- oder Zeitentscheider verbundene Anordnung zur Ortungssignalauswertung (OSA) und eine damit verbundene Einrichtung (SBG, SBE) zur Steuerung eines Schleifenschalters (S) zur Verbindung eines Ausganges des empfangenden Regenerators (REG1) mit einem Eingang eines Regenerators (REG2) für die Gegenrichtung enthält, bei der ein hochspannungsfester Übertrager (Ü1) das Steuersignal für den Schleifenschalter (S) zu einem im zweiten Regenerator (REG2) enthaltenen Steuerfrequenzempfänger (SBE) überträgt, bei der der Ausgang des Steuerfrequenzempfängers (SBE) mit einem Steuereingang des Schleifenschalters (S) verbunden ist, dessen Eingang mit einem Ausgang des ersten Regenerators und dessen Ausgang mit einem Eingang des zweiten Regenerators verbunden ist, dadurch gekennzeichnet, daß an den Ausgang der Einrichtung zur Ortungssignalauswertung (OSA) der Eingang eines Steuerfrequenzoszillators (SBG) mit einer Schwingfrequenz bei etwa 1 % der Nyquistfrequenz der zu übertragenden PCM-Signale angeschlossen ist und daß der Steuerfrequenzoszillator (SBG) als frequenzbestimmendes Glied die Primärwicklung des hochspannungsfesten Übertragers (Ü1) enthält, daß der Steueroszillator (SBG) ein mit dessen Steuereingang verbundenes UND-Gatter (G) enthält, dessen Ausgang über einen ersten Widerstand (R1) mit dem Kollektoranschluß eines ersten Transistors (T1) und mit dem einen Anschluß der Primärwicklung (L1) des ersten Übertragers (Ü1) verbunden ist, daß der zweite Anschluß dieser Primärwicklung (L1) mit dem Basisanschluß des ersten Transistors (T1) und über einen ersten Kondensator (C1) mit Masse verbunden ist, daß der Emitteranschluß des ersten Transistors (T1) direkt und der Kollektoranschluß dieses Transistors über einen zweiten Kondensator (C2) mit Masse verbunden sind und daß die Sekundärwicklung (L2) des ersten Übertragers (Ü1) mit dem Eingang des Steuerfrequenzempfängers (SBE) verbunden ist.

2. Schaltungsanordnung nach Anspruch 1, dadurch gekennzeichnet, daß die Einrichtung zur Ortungssignalauswertung (OSA) aus dem empfangenen Ortungssignal einen Logikpegel zur Einschaltung des Steuerfrequenzoszillators (SBG) erzeugt.

3. Schaltungsanordnung nach Anspruch 1 oder 2, dadurch gekennzeichnet, daß der Steuerfrequenzempfänger (SBE) eingangsseitig an die Sekundärwicklung (L2) des ersten, vom Steuerfrequenzoszillator gespeisten Übertragers (Ü1) angeschlossen ist, daß der eine Anschluß der Sekundärwicklung mit dem Basisanschluß eines zweiten Transistors (T2) und der andere Anschluß der Sekundärwicklung über die Reihenschaltung eines zweiten Widerstandes (R2) und eines dritten Kondensators (C3) mit Masse und über einen dritten Widerstand (R3) mit dem Kollektoranschluß des zweiten Transistors (T2) verbunden ist, daß der Kollektoranschluß dieses Transistors außerdem über einen vierten Widerstand (R4) mit einem Anschluß für die Betriebsspannung (U) und über eine erste Diode (D) mit dem einen Anschluß einer Parallelschaltung aus einem fünften Widerstand (R5) und einem fünften Kondensator (C5) und über einen sechsten Widerstand (R6) mit dem Basisanschluß eines dritten Transistors (T3) verbunden ist, daß der andere Anschluß der Parallelschaltung und der Emitteranschluß des dritten Transistors (T3) mit Masse verbunden ist und der Kollektoranschluß des dritten Transistors über einen siebten Widerstand (R7) mit dem Anschluß für die Betriebsspannung (U) und mit einem Ausgangsanschluß (Op) verbunden ist, an den der Steueranschluß des Schleifenschlußschalters (S) angeschlossen ist.

4. Schaltungsanordnung nach Anspruch 1, dadurch gekennzeichnet, daß zur Bildung des Schleifenschlusses eine kapazitätsarme und hochspannungsfeste zweite Sekundärwicklung im Ausgangsübertrager (Ü2) des Impulsverstärkers (V1) vorgesehen ist, daß der eine Anschluß der Sekundärwicklung dieses Übertragers (Ü2) mit einem Masseanschluß des Entzerrers des zweiten Regenerators (REG2) und der andere Anschluß der Sekundärwicklung mit einem zweiten Signaleingang des Schleifenschlußschalters (S) verbunden ist.

## Claims

1. Circuit arrangement for the formation of a loop closure in an intermediate regenerator of a PCM system with a first (REG1) and a second (REG2) PCM regenerator, which operate in different directions of transmission, wherein each regenerator includes an input-end equalizer (E1, E2) and, connected thereto, the series arrangement of an amplitude decision device (AE1 ; AE2), a time decision device (ZE1, ZE2), and a pulse amplifier (V1, V2), and wherein the two regenerators (REG1, REG2) which are on different potential are connected to one another by at least one high-voltage-resistant signal junction (Ü2), and moreover the receiving regenerator (REG1) includes a locating-signal analysis arrangement (OSA) which is connected to its amplitude-or time-decision device, and a connected device (SBG, SBE) which serves to control a loop switch (S) for connecting an output of the receiving regenerator (REG1) to an input of a regenerator (REG2) for the opposite direction, wherein a high-voltage transformer (Ü1) transmits the control signal for the loop switch (S) to a control frequency receiver (SBE) included in the second regenerator (REG2), wherein the output of the control frequency receiver (SBE) is connected to a control input of the loop switch (S) whose input is connected to an output of the first regenerator and whose output is connected to an input of the second regenerator, characterised in that the output of the locating-signal analysis device (OSA) is connected to the input of a control frequency oscillator (SBG) whose oscillating frequency is approximately 1 % of the Nyquist frequency of the PCM signals which are to be transmitted, and that the control frequency oscillator (SBG) includes — as frequency-determining element — the primary winding of the high-voltage transformer (Ü1), that the control oscillator (SBG) includes an AND gate (G) which is connected to its control input and whose output is connected via a first resistor (R1) to the collector terminal of a first transistor (T1) and to the first terminal of the primary winding (L1) of the first transformer (Ü1), that the second terminal of this primary winding (L1) is connected to the base terminal of the first transistor (T1) and is connected to earth via a first capacitor (C1), that the emitter terminal of the first transistor (T1) is connected directly to earth whereas the collector terminal of this transistor is connected via a second capacitor (C2) to earth, and that the secondary winding (L2) of the first transformer (Ü1) is connected to the input of the control frequency receiver (SBE).

2. Circuit arrangement as claimed in claim 1, characterised in that from the received locating-signal the locating-signal analysis device (OSA) produces a logic level for switching on the control frequency oscillator (SBG).

3. Circuit arrangement as claimed in claim 1 or 2, characterised in that at its input end the control frequency receiver (SBE) is connected to the secondary winding (L2) of the first transformer (Ü1) which is fed from the control frequency oscillator, that the first terminal of the secondary winding is connected to the base terminal of a second transistor (T2) whereas the other terminal of the secondary winding is connected to earth via the series arrangement of a second resistor (R2) and a third capacitor (C3) and is connected via a third resistor (R3) to the collector terminal of the second transistor (T2), that the collector terminal of this transistor is also connected via a fourth resistor (R4) to a terminal for the operating voltage (U) and via a first diode (D) to the first terminal of a parallel arrangement comprising a fifth resistor (R5) and a fifth capacitor (C5) and via a sixth resistor (R6) to the base terminal of a third transistor (T3), that the other terminal of the parallel arrangement and the emitter terminal of the third transistor (T3) are connected to earth, and the collector terminal of the third transistor is connected via a seventh resistor (R7) to the terminal for the supply voltage (U) and to an output terminal (Op) to which the control terminal of the loop closure switch (S) is connected.

4. Circuit arrangement as claimed in claim 1, characterised in that for the formation of the loop closure, a high-voltage-resistant second secondary winding which is low in capacitance is arranged in the output transformer (Ü2) of the pulse amplifier (V1), that the first terminal of the secondary winding of this transformer (Ü2) is connected to an earth terminal of the equalizer of the second regenerator (REG2) and the other terminal of the secondary winding is connected to a second signal input of the loop closure switch (S).

**Revendications**

1. Montage pour réaliser une fermeture de boucle dans un régénérateur intermédiaire d'un système MIC, comportant un premier régénérateur MIC (REG1) et un second régénérateur MIC (REG2), qui agissent dans des sens différents de transmission, et dans lequel chaque régénérateur contient un correcteur de distorsions (E1, E2), situé du côté entrée et, raccordé à ce dernier, le montage série formé d'un discriminateur d'amplitude (AE1 ; AE2), d'un discriminateur de temps (ZE1, ZE2) et d'un amplificateur d'impulsions (V1, V2), et dans lequel les deux régénérateurs (REG1, REG2) situés à des potentiels différents sont reliés entre eux par l'intermédiaire d'au moins un transformateur de signaux (Ü2) résistant à la haute tension et qu'en outre le régénérateur de réception (REG1) contient un dispositif (OSA) relié à son discriminateur d'amplitude ou de temps et servant à évaluer des signaux de localisation et un dispositif (SBG, SBE) qui y est lié et qui sert à commander un interrupteur de boucle (S) pour relier une sortie du régénérateur de réception (REG1) à une entrée d'un régénérateur (REG2) pour le sens opposé, et dans lequel le transformateur (Ü1) résistant à la haute tension transmet le signal de commande pour l'interrupteur de boucle (S) à un récepteur de la fréquence de commande (SBE) contenu dans le second régénérateur (REG2), et dans lequel la sortie du récepteur de la fréquence de commande (SBE) est reliée à une entrée de commande de l'interrupteur de boucle (S), dont l'entrée est reliée à une sortie du premier régénérateur et dont la sortie est reliée à une entrée du second régénérateur, caractérisé par le fait qu'à la sortie du dispositif (OSA) d'évaluation des signaux de localisation est reliée l'entrée d'un oscillateur (SBG) fournissant la fréquence de commande et possédant une fréquence d'oscillation égale à environ 1 % de la fréquence de Nyquist des signaux MIC devant être transmis, et que l'oscillateur (SBG) délivrant la fréquence de commande contient, en tant qu'organe déterminant la fréquence, un roulement primaire du transformateur (Ü1) résistant à la haute tension, que l'oscillateur de commande (SBG) contient une porte ET (G) reliée à son entrée de commande et dont la sortie est reliée par l'intermédiaire d'une première résistance (R1) à la borne de collecteur d'un premier transistor (T1) et à une borne de l'enroulement primaire (L1) du premier transformateur (Ü), que la seconde borne de cet enroulement primaire (L1) est reliée à la borne de base du premier transistor (T1) et par l'intermédiaire d'un premier condensateur (C1) à la masse, que la borne d'émetteur du premier transistor (T1) est relié directement à la masse et que la borne de collecteur de ce transistor est relié par l'intermédiaire d'un second condensateur (C2) à la masse et que l'enroulement secondaire (L2) du premier transformateur (Ü1) est relié à l'entrée du récepteur (SBE) de la fréquence de commande.

2. Montage suivant la revendication 1, caractérisé par le fait que le dispositif (OSA) d'évaluation des signaux de localisation produit, à partir du signal de localisation reçu, un niveau logique servant à brancher l'oscillateur (SBG) délivrant la fréquence de commande.

3. Montage suivant la revendication 1 ou 2, caractérisé par le fait que le récepteur (SBE) de la fréquence de commande est raccordé, du côté entrée, à l'enroulement secondaire (L2) du premier transformateur (Ü1) alimenté par l'oscillateur délivrant la fréquence de commande, qu'une borne de l'enroulement secondaire est reliée à la borne de base d'un second transistor (T2) et que l'autre borne de l'enroulement secondaire est reliée par l'intermédiaire du montage série formé d'une seconde résistance (R2) et d'un troisième condensateur (C3), à la masse, et, par l'intermédiaire d'une troisième résistance (R3), à la borne de collecteur du second transistor (T2), que la borne de collecteur de ce transistor est relié en outre par l'intermédiaire d'une quatrième résistance (R4) à une borne prévue pour la tension de service (U) et par l'intermédiaire d'une première diode (D) à une borne d'un montage parallèle formé d'une cinquième résistance (R5) et d'un cinquième condensateur (C5), et, par l'intermédiaire d'une sixième résistance (R6), à la borne de base d'un troisième transistor (T3), que l'autre borne du montage parallèle et la borne d'émetteur du troisième transistor (T3) sont reliées à la masse et que la borne de collecteur du troisième transistor est relié par l'intermédiaire d'une septième résistance (R7) à la borne prévue pour la tension de service (U) et à une borne de sortie (Op) à laquelle est raccordée la borne de commande l'interrupteur de fermeture de boucle (S).

4. Montage suivant la revendication 1, caractérisé par le fait que pour réaliser la fermeture de boucle, il est prévu un second enroulement secondaire présentant une faible capacité et résistant à la haute tension, dans le transformateur de sortie (Ü2) de l'amplificateur d'impulsions (V1), qu'une borne de l'enroulement secondaire de ce transformateur (Ü2) est reliée à une borne de masse du correcteur de distorsions du second régénérateur (REG2) et que l'autre borne de l'enroulement secondaire est reliée à une seconde entrée des signaux de l'interrupteur de fermeture de boucle (S).

# FIG 1

# FIG 2